# EUROPEAN PATENT APPLICATION

(11) **EP 0 776 943 A1**
(43) Date of publication of application: **04.06.1997**
(21) Application number: 96119221.8
(22) Date of filing: 29.11.1996
(51) Int. Cl.: C08L 83/04, C08K 5/00, B01J 31/12

(54) **Curing catalyst for organopolysiloxane compositions and curable organopolysiloxane compositions**

(30) Priority: 30.11.1995 JP 336115/95
(71) Applicant: Dow Corning Toray Silicone Company, Limited, Tokyo 103 (JP)
(72) Inventor: Nakanishi, Junji, Dow Corning Toray Silicone Co, Ichihara-shi, Chiba Pref. (JP); Yoshitake, Makoto, Dow Corning Toray Silicone Co, Ichihara-shi, Chiba Pref. (JP)
(74) Representative: Spott, Gottfried, Dr.

(57) **Abstract**

There is disclosed a curing catalyst useful for organopolysiloxane compositions, which cure through the action of both light and moisture, that have a radical photopolymerization initiator and a titanium compound condensation catalyst, and which do not induce a reciprocal deterioration in the respective catalytic activities. The curing catalyst comprises (a) from 1 to 99 wt% of a radical photopolymerization initiator of general formula: 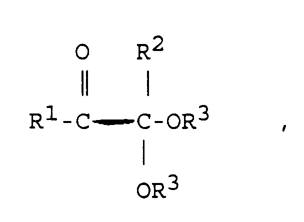 where
R¹ is a substituted or unsubstituted aryl radical, R² is hydrogen atom or a monovalent hydrocarbon radical, and R³ is an alkyl radical, and (b) from 99 to 1 wt% of a titanium compound condensation catalyst. Curable organopolysiloxane compositions containing the claimed curing catalyst provide compositions which surprisingly cure by both radiation and exposure to moisture without adverse interactions on deactivation reactions.

## Description

This invention relates to a curing catalyst for use in organopolysiloxane compositions that cure under the action of light and moisture (hereinafter abbreviated as light/moisture dual-cure organopolysiloxane compositions), and to the curable organopolysiloxane compositions that contain said curing catalyst.

One-part room-temperature-curable organopolysiloxane compositions exhibit excellent heat resistance, electrical properties, and weathering resistance. As a consequence, they are used, for example, in adhesives, potting materials, and coatings. However, these compositions require relatively long periods of time to achieve a complete cure since they cure by a moisture-mediated condensation reaction. In contrast, photopolymerization reactions in which the reaction is initiated by exposure to light, have rapid reaction rates. This fact has led to the appearance of compositions that combine photopolymerization reactions with conventional moisture-mediated curing reactions, such as U.S. Patent 4,290,869; JP-A 63-99214; EP-A 0332400; JP-B 5-63514; JP-A 5-295271; JP-A 5-295272; U.S. Patent 5,371,116; JP-A 6-32985; and JP-A 6-57143.

A radical photopolymerization initiator, which generates free radicals upon exposure to light, is frequently used as the photopolymerization initiator in these dual-cure compositions. Tin and titanium compounds are also known as condensation reaction catalysts for one-part room-temperature-curable compositions. However, since the tin compounds impair post-cure thermal stability, titanium compounds are generally used as the more suitable choice. Unfortunately, radical photopolymerization initiators and titanium compound condensation catalysts readily interact with each other. Inactivation can occur in association with these decomposition reactions, and numerous other restrictions on their combined use have caused such combinations to be impractical.

U.S. Patent 4,290,869 has even proposed a composition comprising the combination of a radical photopolymerization initiator with a titanium compound condensation catalyst. However, the preferred radical photopolymerization initiators, i.e., xanthone, thioxanthone, and benzoin ethers, are weakly soluble in organopolysiloxanes and especially in polydimethylsiloxane. As a result, they are unable to generate a practical photopolymerization initiator activity. In summary, there is demand for a practically useful radical photopolymerization initiator/titanium compound condensation catalyst combination that will not suffer from reciprocal deactivation in catalytic activities.

The present invention was achieved as a result of extensive research directed to solving the above-described problems.

An object of the present invention is to provide a curing catalyst useful for light/moisture dual-cure organopolysiloxane compositions, wherein the radical photopolymerization initiator and titanium compound condensation catalyst, do not induce a reciprocal deterioration in the respective catalytic activities. Another object is to provide a curable organopolysiloxane composition that contains said curing catalyst.

The present invention is a curing catalyst for organopolysiloxane compositions comprising (a) from 1 to 99 weight% of a radical photopolymerization initiator with the general formula: 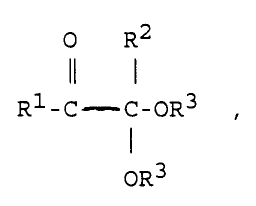 where
R¹ is a substituted or unsubstituted aryl radical, R² is hydrogen atom or a monovalent hydrocarbon radical, and R³ is an alkyl radical, and (b) from 99 to 1 weight% of a titanium compound condensation catalyst.

The invention also introduces to a curable organopolysiloxane composition comprising (A) from 90 to 99.8 weight% of an organopolysiloxane, having in each molecule silicon-bonded alkoxy and a functional group that undergoes a polymerization reaction when exposed to light in the presence of a radical photopolymerization initiator, and (B) from 0.2 to 10 weight% of the above-described curing catalyst.

The radical photopolymerization initiator useful in the curing catalyst of the present invention is defined by the following general formula: 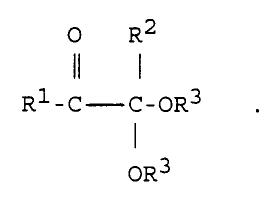 R¹ is a substituted or unsubstituted aryl radical, and is exemplified by phenyl, naphthyl, p-tolyl, p-methoxyphenyl, and p-nitrophenyl. R² is hydrogen atom or a monovalent hydrocarbon radical. The latter is exemplified by alkyl such as methyl, ethyl, propyl, butyl, pentyl, isopropyl, isobutyl, cyclopentyl, and cyclohexyl; alkenyl such as vinyl, allyl, and 5-hexenyl; aryl such as phenyl or naphthyl; and aralkyl such as benzyl or 1-phenylethyl. R³ denotes an alkyl radical exemplified by methyl, ethyl, propyl, butyl, pentyl, isopropyl, isobutyl, cyclopentyl, and cyclohexyl. The radical photopolymerization initiator is exemplified by 2,2-dimethoxypropiophenone, 2,2-dimethoxy- 2-phenylacecophenone, and 2,2-diethoxyacetophenone. The catalyst of this invention contains from 1 to 99 weight%, and preferably from 6 to 94 weight%, of the radical photopolymerization initiator.

The titanium compound condensation catalyst of our curing catalyst is used to induce condensation while silicon-bonded alkoxy groups hydrolyze under the action of moisture. Titanium compounds known as condensation reaction catalysts are, for example, tetraalkoxytitanium compounds such as tetraisopropoxytitanium or tetrabutoxytitanium and organotitanium chelate compounds such as diisopropoxy bis(ethyl acetoacetate) titanium or diisopropoxy bis(acetylacetonate) titanium. The catalyst of the present invention contains from 99 to 1 weight%, and preferably from 94 to 6 weight%, of the titanium compound condensation catalyst.

Our curing catalyst is composed of the above-described radical photopolymerization initiator and the titanium compound condensation catalyst. This curing catalyst may be deployed in an organopolysiloxane composition, either by adding a preliminarily prepared mixture of the two components to the composition, or by adding each component separately to the composition.

The organopolysiloxane, component (A), contains in each molecule at least one silicon-bonded alkoxy group and at least one functional group capable of undergoing a polymerization reaction upon exposure to light in the presence of the radical photopolymerization initiator. Each of these groups preferably makes up from 0.1 to 10 mole% of the total silicon-bonded organic groups.

The photopolymerizable functional group is exemplified by acrylic groups such as acrylamide or acryloxy; methacrylic groups such as methacrylamide or methacryloxy; the mercapto group, and alkenyl groups such as vinyl or allyl. The acrylic, methacrylic, and mercapto groups are preferably bonded to silicon across a divalent hydrocarbon group such as alkylene. Furthermore, neither mercapto nor alkenyl can initiate reaction by themselves. The reaction must be initiated only in the presence of both. As a result, both groups are present in component (A), or an alkenyl-functional organopolysiloxane must also be added when the polymerization-reactive group in this component is just mercapto, or a mercapto-functional organopolysiloxane must be added when the polymerization-reactive group is only alkenyl. Mixtures of this nature will be further explained below as component (A').

The silicon-bonded alkoxy group is hydrolyzed under the influence of atmospheric moisture to give silanol, whose condensation induces curing in our composition. The alkoxy is exemplified by methoxy, ethoxy, and propoxy.

The bonding positions for the two types of functional groups under discussion are not critical, and these groups may be bonded at terminal or nonterminal positions, and at both positions. Moreover, the photopolymerizable functional group may be bonded to alkoxy-bearing silicon atoms. The silicon-bonded organic groups, other than these two types of functional groups, are exemplified by monovalent hydrocarbon groups, and are preferably alkyl such as methyl, ethyl, or propyl. The molecular structure of organopolysiloxane (A) is exemplified by straight-chain, branch-containing chain, network, and three- dimensional structures, with straight-chain structures preferred. This component preferably has a viscosity in the range from 0.1 to 1,000 Pa.s, and more preferably from 0.5 to 100 Pa.s.

Component (A) is exemplified by the following structural formulas, wherein Me represents methyl and does so hereinafter:

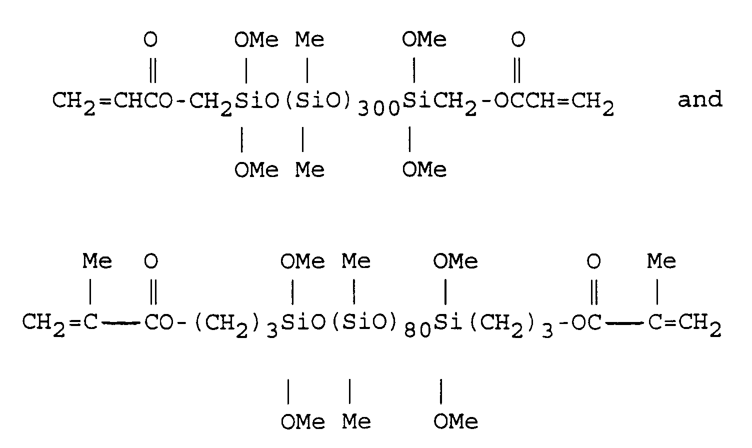

The organopolysiloxane mixture (A') used in our composition comprises mercapto-functional organopolysiloxane plus alkenyl-functional organopolysiloxane. At least one of these two organopolysiloxanes must also contain silicon-bonded alkoxy. The alkenyl is exemplified by vinyl or allyl, and the alkoxy is exemplified by methoxy, ethoxy, and propoxy. The mercapto group is preferably bonded to silicon across a divalent hydrocarbon group such as alkylene. Each of the mercapto, alkenyl, and alkoxy groups in this component is preferably present at from 0.1 to 10 mole% of the total silicon-bonded organic groups. These groups are bonded in the terminal or nonterminal position, or at both positions. The mercapto group and alkenyl group may each be bonded to an alkoxy-bearing silicon atom. The silicon-bonded organic groups in the two organopolysiloxanes of component (A'), other than the above-described functional groups, are exemplified by monovalent hydrocarbon groups, preferably alkyl such as methyl, ethyl, and propyl. The molecular structures of these organopolysiloxanes are exemplified by straight-chain, branch-containing chain, network, and three-dimensional structures, with straight-chain structures preferred. The viscosity is preferably in the range from 0.1 to 1,000 Pa.s, and more preferably from 0.5 to 100 Pa.s. The mercapto to alkenyl molar ratio in this component ranges from 1:10 to 10:1, and is preferably 1:5 to 5:1.

This component is exemplified by mixtures of the following structural formulas:

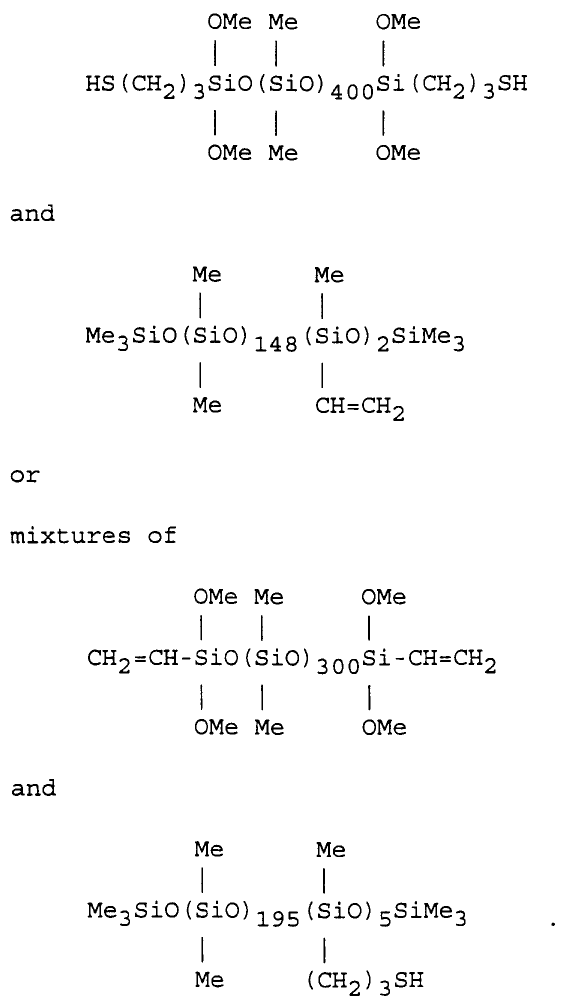

The composition of the present invention comprises either component (A) or (A'), as described above, plus the curing catalyst of the present invention. In addition to these components, it may contain, insofar as the objects of the present invention are not impaired, storage stabilizers such as alkoxysilane, noncrosslinking diorganopolysiloxane, plasticizer, filler such as fumed silica, thixotropy agent, heat stabilizer, colorant, and adhesion promoter. The alkoxysilane is exemplified by methyltrimethoxysilane, methacryloxypropyltrimethoxysilane, vinyltrimethoxysilane, and mercaptopropyltrimethoxysilane. The alkoxysilane content is preferably from 0.1 to 10 weight%, based on the weight of the total composition of our invention. The noncrosslinking diorganopolysiloxane is exemplified by trimethylsiloxy-endblocked dimethylpolysiloxanes or trimethylsiloxy-endblocked methylphenylpolysiloxanes.

Our composition is prepared by mixing the above-described component (A) or (A') with our claimed curing catalyst. Mixing is preferably carried out while shutting out moisture and light. When light cannot be shut out, mixing is preferably carried out under a dry, oxygenated atmosphere.

The curing catalyst of this invention is well-suited for use as the catalyst in a light/moisture dual-cure organopolysiloxane composition, because the titanium compound condensation catalyst and the radical photopolymerization initiator do not participate in a reciprocal or cross deactivation of catalytic activities. The curable organopolysiloxane composition of this invention, which also contains our claimed catalyst, begins to cure immediately upon exposure to light, and the condensation reaction due to the action of atmospheric moisture proceeds concurrently. As a result, curing will be complete in from 2 hours to 1 week. The light irradiated on our curing composition is exemplified by visible light from the sun or a fluorescent lamp; and by UV radiation from a high-pressure mercury lamp, xenon lamp, or metal halide lamp. The irradiation dose is preferably in the range from 20 to 5,000 mJ/cm².

### EXAMPLE 1

The following were mixed to homogeneity to give a curable organopolysiloxane composition: 50.0 g of dimethylpolysiloxane, bearing methacryloxy and silicon-bonded methoxy at its molecular chain terminals, with the following average structural formula 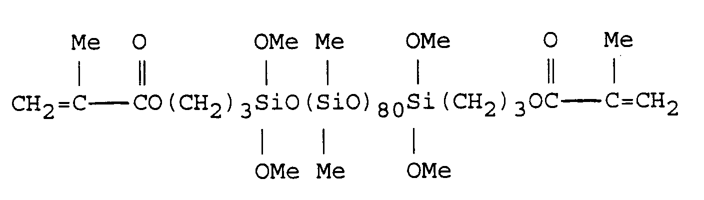 1.0 g of 2,2-dimethoxy-2-propiophenone, 1.0 g of tetrabutoxytitanium, and 7.3 g of methacryloxypropyltrimethoxysilane. 10 g of this composition were weighed into an aluminum cup (diameter = 5 cm) and immediately irradiated from above with UV radiation from a 300-W high-pressure mercury lamp (irradiation dose = 500 to 1,000 mJ/cm²). The curing status was measured immediately after irradiation, and the results are reported in Table 1. In addition, the UV-irradiated composition was held in the atmosphere and the curing status was inspected after particular periods of time (1, 4, and 24 hours). Curable organopolysiloxane compositions, prepared as above, were also held in the atmosphere without being irradiated with UV light. The curing status was again inspected after particular periods of time (1, 4, and 24 hours). These results are reported in Table 2.

### EXAMPLE 2

The following were mixed to homogeneity to give a curable organopolysiloxane composition: 39.0 g of dimethylpolysiloxane, bearing mercapto and silicon-bonded methoxy at its molecular chain terminals, with the following average structural formula 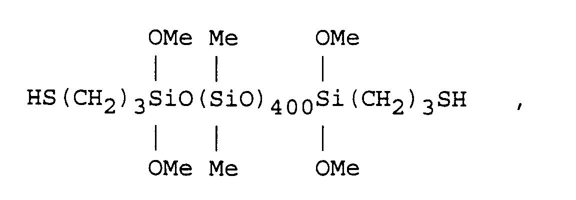 11.0 g of vinyl-functional diorganopolysiloxane with the following average structural formula 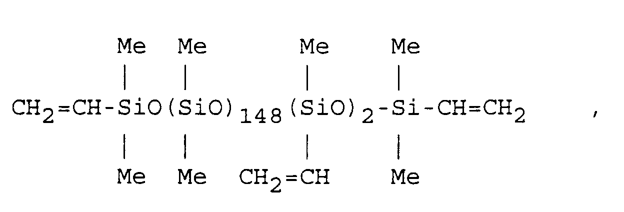 0.5 g of 2,2-dimethoxy-2-phenylacetophenone, 1.0 g of tetrabutoxytitanium, and 3.0 g of methyltrimethoxysilane. The curing status of the composition immediately after UV irradiation, and after standing under the atmosphere, were measured as in Example 1, and the results are reported in Tables 1 and 2.

### EXAMPLE 3

The following were mixed to homogeneity to give a curable organopolysiloxane composition: 38.5 g of dimethylpolysiloxane, bearing vinyl and silicon-bonded methoxy at its molecular chain terminals, with the following average structural formula 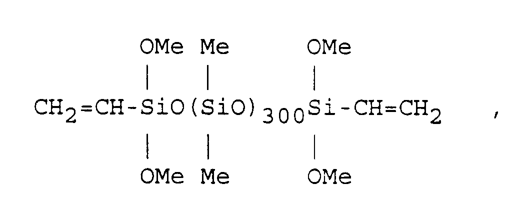 11.5 g of mercapto-functional diorganopolysiloxane with the following average structural formula 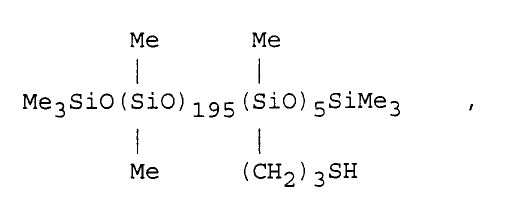 0.5 g of 2,2-dimethoxy-2-propiophenone, 2.0 g of diisopropoxy bis(ethyl acetoacetate) titanium, and 3.0 g of methyltrimethoxysilane. The curing status of the composition, immediately after UV irradiation and after standing under the atmosphere, were measured as in Example 1, and the results are reported in Tables 1 and 2.

### COMPARATIVE EXAMPLE 1

The following were mixed to homogeneity to give a curable organopolysiloxane composition: 50.0 g of dimethylpolysiloxane, bearing methacryloxy and silicon-bonded methoxy at its molecular chain terminals, with the following average structural formula 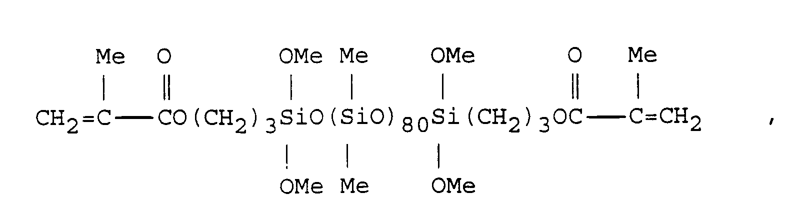 1.0 g of benzophenone as radical photopolymerization initiator, 1.0 g tetrabutoxytitanium, and 7.3 g of methacryloxypropyltrimethoxysilane. The curing status of the composition, immediately after UV irradiation and after standing under the atmosphere, were measured as in Example 1, and the results are reported in Tables 1 and 2.

### COMPARATIVE EXAMPLE 2

The following were mixed to homogeneity to give a curable organopolysiloxane composition: 39.0 g of dimethylpolysiloxane, bearing mercapto and silicon-bonded methoxy at its molecular chain terminals, with the following average structural formula 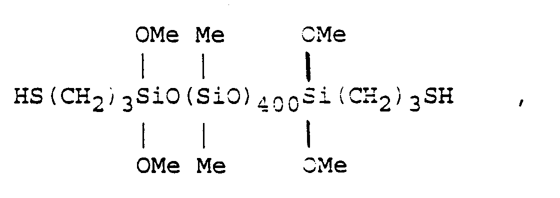 11.0 g of vinyl-functional diorganopolysiloxane with the following average structural formula 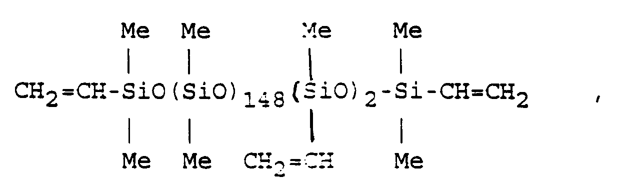 0.5 g of 2-hydroxy-2-methylpropiophenone as radical photopolymerization initiator, 1.0 g of tetrabutoxytitanium, and 3.0 g of methyltrimethoxysilane. The resulting composition, presented a white turbidity. The curing status of the composition, immediately after UV irradiation and after standing under the atmosphere, were measured as in Example 1, and the results are reported in Tables 1 and 2.

### COMPARATIVE EXAMPLE 3

The following were mixed to homogeneity to give a curable organopolysiloxane composition: 38.5 g of dimethylpolysiloxane, bearing vinyl and silicon-bonded methoxy at its molecular chain terminals, with the following average structural formula 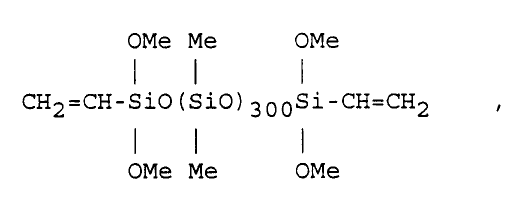 11.5 g of mercapto-functional diorganopolysiloxane with the following average structural formula 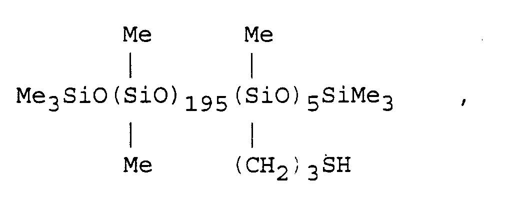 0.5 g of benzoin butyl ether as radical photopolymerization initiator, 2.0 g of diisopropoxy bis(ethyl acetoacetate) titanium, and 3.0 g of methyltrimethoxysilane. This composition also presented a white turbidity. The curing status of the composition immediately after UV irradiation and after standing under the atmosphere, were measured as in Example 1, and the results are reported in Tables 1 and 2.

**TABLE 1**

| CURING STATUS | | |
|---|---|---|
| | 500 mJ/cm² | 1000mJ/cm² |
| Example 1 | partial curing (surface not cured) | cured throughout |
| Example 2 | cured throughout | cured throughout |
| Example 3 | cured throughout | cured throughout |
| Comparative Example 1 | not cured | not cured |
| Comparative Example 2 | partial curing (interior uncured) | partial curing (interior uncured) |
| Comparative Example 3 | not cured | partial curing (interior uncured) |

**TABLE 2**

| CURING STATUS | | | |
|---|---|---|---|
| | After 1 hour | After 4 hours | After 24 hours |
| Example 1 | | | |
| UV at 1000 mJ/cm² | | | |
| after irradiation | cured throughout | cured throughout | cured throughout |
| no irradiation | not cured | not cured | cured throughout |

| Example 2 | | | |
|---|---|---|---|
| UV at 500 mJ/cm² | | | |
| after irradiation | cured throughout | cured throughout | cured throughout |
| no irradiation | not cured | not cured | cured throughout |

| Example 3 | | | |
|---|---|---|---|
| UV at 500 mJ/cm² | | | |
| after irradiation | cured throughout | cured throughout | cured throughout |
| no irradiation | not cured | not cured | cured throughout |

| Comp. Example 1 | | | |
|---|---|---|---|
| UV at 1000 mJ/cm² | | | |
| after irradiation | not cured | not cured | cured throughout |
| no irradiation | not cured | not cured | cured throughout |

| Comp. Example 2 | | | |
|---|---|---|---|
| UV at 500 mJ/cm² | | | |
| after irradiation | partial curing (interior uncured) | partial curing (interior uncured) | cured throughout |
| no irradiation | not cured | not cured | cured throughout |

| Comp. Example 3 | | | |
|---|---|---|---|
| UV at 500 mJ/cm² | | | |
| after irradiation | not cured | partial curing (interior uncured) | cured throughout |
| no irradiation | not cured | not cured | cured throughout |

The curing catalyst according to the present invention comprises the above-described radical photopolymerization initiator and a titanium compounde condensation catalyst. Due to our use of a special type of radical photopolymerization initiator, this curing catalyst is unexpectedly free of reciprocal or cross deactivation in catalytic activities. It is thus useful as a curing catalyst for light/moisture dual-cure organopolysiloxane compositions. The curable organopolysiloxane of this invention, which contains the above catalyst, has a rapid start of cure upon photoirradiation and an ensuing completion of cure under the action of atmospheric moisture.

## Claims

1. A curing catalyst for organopolysiloxane compositions comprising (a) from 1 to 99 weight% of a radical photopolymerization initiator with the general formula 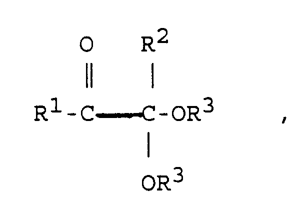 where
R¹ is a substituted or unsubstituted aryl radical, R² is hydrogen atom or a monovalent hydrocarbon radical, and R³ is an alkyl radical, and (b) from 99 to 1 weight% of a titanium compound condensation catalyst.

2. The curing catalyst of claim 1 in which the titanium compound condensation catalyst is a tetraalkoxytitanium compound or an organotitanium chelate compound.

3. A curable organopolysiloxane composition comprising
(A) from 90 to 99.8 weight% of an organopolysiloxane having in each molecule silicon-bonded alkoxy and a functional group that undergoes a polymerization reaction when exposed to light in the presence of a radical photopolymerization initiator and
(B) from 0.2 to 10 weight% of the curing catalyst of claim 1.

4. The curable organopolysiloxane composition of claim 3, in which the functional group in component (A) that undergoes a polymerization reaction when exposed to light is selected from acrylic or methacrylic groups.

5. The curable organopolysiloxane composition of claim 5, in which the titanium compound condensation catalyst of the curing catalyst is a tetraalkoxytitanium or an organotitanium chelate compound.

6. The curable organopolysiloxane composition of claim 5, in which the radical photopolymerization initiator is 2,2-dimethoxy-2-propiophenone or 2,2-dimethoxy-2-phenylacetophenone.

7. The curable organopolysiloxane composition of according to claim 5 in which the organotitanium chelate compound is dialkoxy bis (ethyl acetoacetate) titanium.
